Europäisches Patentamt

European Patent Office

Office européen des brevets

(19)

(11) Numéro de publication: **0 143 713**
**B1**

(12) **FASCICULE DE BREVET EUROPEEN**

(45) Date de publication du fascicule du brevet:
**05.08.87**

(51) Int. Cl.⁴: **G 01 G 19/18**, G 01 G 3/14

(21) Numéro de dépôt: **84402393.7**

(22) Date de dépôt: **23.11.84**

(54) **Poutre peseuse.**

(30) Priorité: **25.11.83 FR 8319074**

(43) Date de publication de la demande:
**05.06.85 Bulletin 85/23**

(45) Mention de la délivrance du brevet:
**05.08.87 Bulletin 87/32**

(84) Etats contractants désignés:
**AT BE CH DE FR GB IT LI LU NL SE**

(56) Documents cités:
**EP - A - 0 071 652**
**FR - A - 2 107 837**
**FR - A - 2 436 373**
**US - A - 3 754 438**
**US - A - 4 283 941**
**US - A - 4 305 475**
**US - A - 4 363 369**

(73) Titulaire: **ETS GABILLARD FRERES, Route de la**
**Tessoualle B.P. No. 656, F-49306 Cholet Cedex (FR)**

(72) Inventeur: **Gabillard, Paul Félix Marie, Route de la**
**Tessoualle - B.P. no. 656, F-49306 Cholet Cedex (FR)**

(74) Mandataire: **Schrimpf, Robert et al, Cabinet**
**Regimbeau 26, Avenue Kléber, F-75116 Paris (FR)**

ACTORUM AG

## Description

La présente invention concerne un dispositif de mesure d'une force d'action normale à une ligne de grande longueur. La présente invention s'applique plus particulièrement, mais non exclusivement, à la mesure du poids d'objets de grande longueur, spécialement ceux qui sont manoeuvrés au pont roulant comme les fers, grumes, poteaux, et analogues. La mesure s'effectue par capture et sommation électronique de deux composantes de cette force, considérées en des points espacés de cette ligne.

On sait que de nombreux dispositifs utilisent une seule jauge de contrainte, la mesure s'effectuant suivant la direction même du poids. Si l'ensemble est suspendu suivant l'utilisation de l'invention qui semble devoir présenter le plus d'intérêt, il est muni d'un seul crochet. Dans ces conditions, si la charge est de grande longueur et accrocchée à un palonnier, un déséquilibre fortuit de celle-ci peut entraîner des détériorations graves. On connaît également un dispositif de pesage où la plate-forme mobile sur les rails du portique est équipée de jauges de contrainte. Les jauges dites à compression imposent pratiquement une telle technique. Dans ce cas, le prix de revient est élevé car cette utilisation suppose des contraintes parfaitement axiales et un excellent parallélisme des plans de réception et d'appui. Enfin, ce mode de construction est très mal adapté à la transformation d'une installation existante. Par ailleurs, dans tous les cas, un tel ensemble est soumis à des forces vives, à des chocs importants, et à des couples considérables en cas de balancement de la charge.

L'invention a donc pour but de fournir une poutre peseuse d'un nouveau type pouvant s'adapter sans tranformation à un pont roulant.

L'invention a encore pour but de fournir une structure qui permet de s'affranchir au mieux des contraintes d'usinage. Ladite structure permet le pesage d'objets de grande longueur, tout en étant capable d'absorber les défauts d'alignement entre poutre et charge, et d'absorber aussi les effets d'inertie à l'arrachement de la charge ou lors de la repose de celle-ci.

La construction selon l'invention est caractérisée d'une part par une pièce métallique, de préférence en forme de poutre, appelée le massif, équipée de moyens formant jauges de contrainte à double cisaillement en appui sur elle, d'autre part par un cadre répartiteur à l'intérieur duquel est logé ledit massif, la jonction entre le cadre et les moyens formant jauges étant réalisée à chaque fois par un lien élastique. Grâce à cette disposition d'ensemble, massif et cadre possèdent un important degré de liberté dans leur position réciproque. Le mécanisme peut jouer assez librement devant une contrainte quelconque et la position d'équilibre est rapidement obtenue.

Dans un mode préféré de l'invention, pour une application à un pont de manutention et de pesage, le massif est suspendu aux câbles de manoeuvre du pont, ces câbles passant librement au travers d'orifices ménagés dans la partie supérieure du cadre alors que la partie inférieure de ce cadre est équipée de crochets de suspension. Ainsi de nombreux matériels de levage se voient doter de la fonction pesage sans aucune transformation.

D'autres caractéristiques et avantages de la présente invention apparaîtront à la lecture de la description détaillée qui va suivre et en regard des dessins annexés, donnés à titre d'exemples non limitatifs et sur lesquels:

la fig. 1 représente, en coupe verticale, les éléments essentiels d'une poutre peseuse conforme à un mode de réalisation préféré de l'invention,

la fig. 2 représente, une vue en coupe du même dispositif suivant un plan de coupe référencé II-II sur la fig. 1,

la fig. 3 représente une vue de détail de l'une des jauges et du système d'attache correspondant,

la fig. 4 représente une vue en coupe verticale suivant un plan de coupe référencé IV-IV sur la fig. 3,

la fig. 5 représente une vue en coupe verticale suivant un plan de coupe référencé V-V sur la fig. 3,

la fig. 6 représente une vue latérale d'une jauge,

les figures 7 et 8 représentent respectivement des vues de dessus et latérale de la même jauge selon des vues illustrées par les flèches référencées VII et VIII sur la fig. 6.

Le mode de réalisation du dispositif de pesage conforme à la présente invention représenté sur les figures, qui est d'un des modes des réalisation préférés de l'invention, constitue une poutre peseuse suspendue à un pont roulant.

D'une façon générale, ce dispositif comprend un massif 2 sur lequel prennent appui des jauges à double cisaillement 3, 4 et un cadre répartiteur 1.

Les liens entre le cadre 1 et les jauges 3, 4 sont constitués de blocs de caoutchouc néoprène 5, 6 collés sur métal par leurs faces planes 7, 8, 9, 10. Le dispositif d'attache du massif 2 au pont comporte de préférence deux pattes d'attache 11, 12 à point d'articulation aussi haut que possible, prolongées par des chaînes et anneaux 13, 14.

Les dispositifs électroniques 15 de sommation, reliés aux jauges seront de préférence placés à l'intérieur du cadre, de même que l'affichage du résultat sera de préférence local, c'est-à-dire supporté à l'intérieur du cadre. Cet affichage pourra être éventuellement réalisé sur les deux faces du cadre. Bien entendu, de nombreuses facilités, comme le cumul de pesées intermédiaires, pourront être prévues. Enfin, la poutre peut servir de palonnier grâce à des crochets 16, 17.

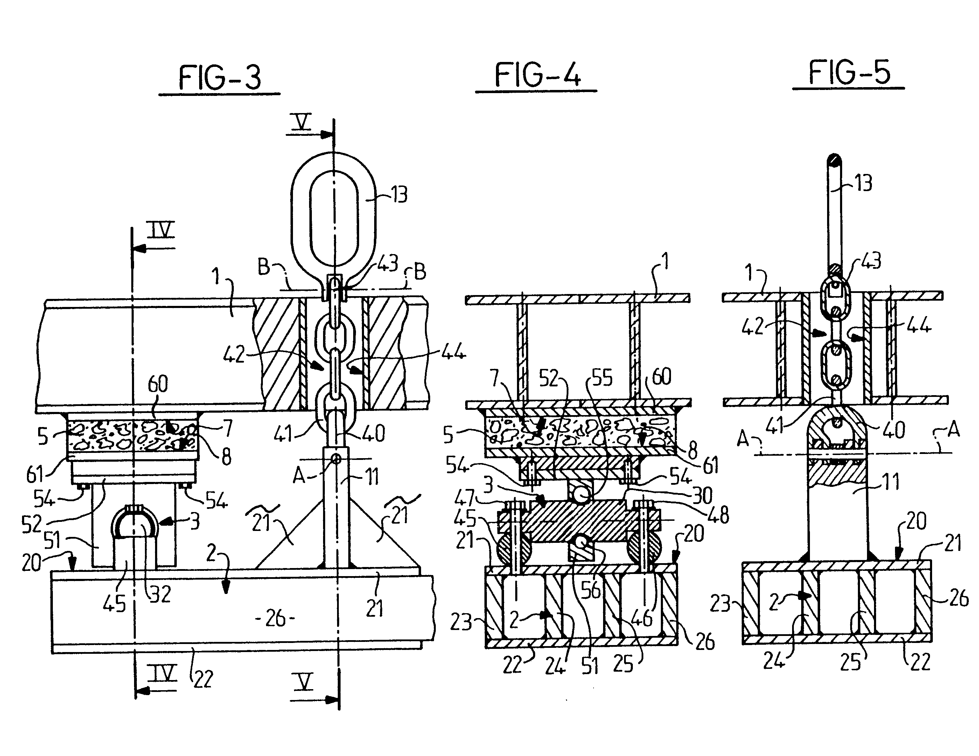

Plus précisément, on aperçoit sur les figures, en particulier sur les figures 3 et 5, une pièce rigide allongée 2 formant massif, et qui porte sur sa surface supérieure 20 des pattes d'attache verticales 11, 12 en saillie vers le haut. De préférence, ces pattes 11, 12 qui sont soudées sur la surface supérieure 20 du massif 2 sont renforcées par des ailettes 21 de triangulation soudées également sur les pattes 11 et le massif 2. Un demi-anneau 40 est fixé sur l'extrémité supérieure des pattes 11, 12 à l'aide d'un tourillon horizontal d'axe A-A. Comme cela apparaît à l'examen des figures 3 et 5, avant l'essemblage du demi-anneau 40 sur les pattes 11, 12, le maillon inférieur 41 d'une chaîne 42 est engagé dans le demi-anneau 40. Le maillon supérieur 43 de cette chaîne 42 est par ailleurs engagé sur le tourillon d'axe B-B d'une chape solidaire de l'anneau 13 précité par l'intermédiaire duquel le massif 2 peut être suspendu au câble de manoeuvre du pont.

La pièce métallique 2 formant massif est bien entendu susceptible de nombreuses variantes de réalisation.

A titre d'exemple, comme représenté sur les figures, en particulier sur les figures 4 et 5, le massif 2 peut être formé de deux plaques métalliques horizontales 21, 22 entre lesquelles et sur lesquelles sont soudées une pluralité d'ailes verticales parallèles, métalliques, formant entretoises référencées 23, 24, 25 et 26.

Comme évoqué précédemment, le massif 2 est logé à l'intérieur du cadre répartiteur 1. Plus précisément encore, selon le mode de réalisation représenté sur les figures, les maillons de la chaîne 42 sont engagés dans des orifices 44 d'extension verticale traversant la branche horizontale supérieure du cadre répartiteur 1. En outre, comme cela apparaît à l'examen des figures 3 et 5, la section transversale des anneaux supérieurs d'accrochage 13, 14 et des pattes de suspension 11, 12 est supérieure à la section transversale (considérée horizontalement) des orifices 44 ménagés dans le cadre répartiteur 1. Cette disposition est importante sur le plan sécurité dans la mesure où, en cas de rupture au niveau de la jauge ou de l'attache, la fixation basse de la chaîne 42 ne peut franchir le tunnel de passage 44 prévu dans le cadre répartiteur 1 et permet donc que la poutre 2 reste suspendu.

Bien entendu, le cadre répartiteur 1 illustré sur les figures est également susceptible d'être l'objet de nombreuses variantes de réalisation.

On va maintenant décrire plus en détail la structure des jauges de contrainte à double cisaillement 3.

Ces jauges de contrainte 3 comprennent un corps d'épreuve 30 généralement cylindrique dont l'axe C-C, horizontal, s'étend transversalement à la grande longueur du massif 2.

Le corps d'épreuve 30 ist muni à mi-longueur d'une gorge périphérique 31 de section hémicirculaire. En outre, le corps d'épreuve 30 des jauges de contrainte est muni de deux prolongements axiaux 32, 33 généralement cylindriques, coaxiaux à l'axe précité et de plus faible section que le corps d'épreuve 30. Ces prolongements 32, 33 sont munis chacun de deux méplats 34, 35 d'une part et 36, 37 d'autre part parallèles entre eux et horizontaux.

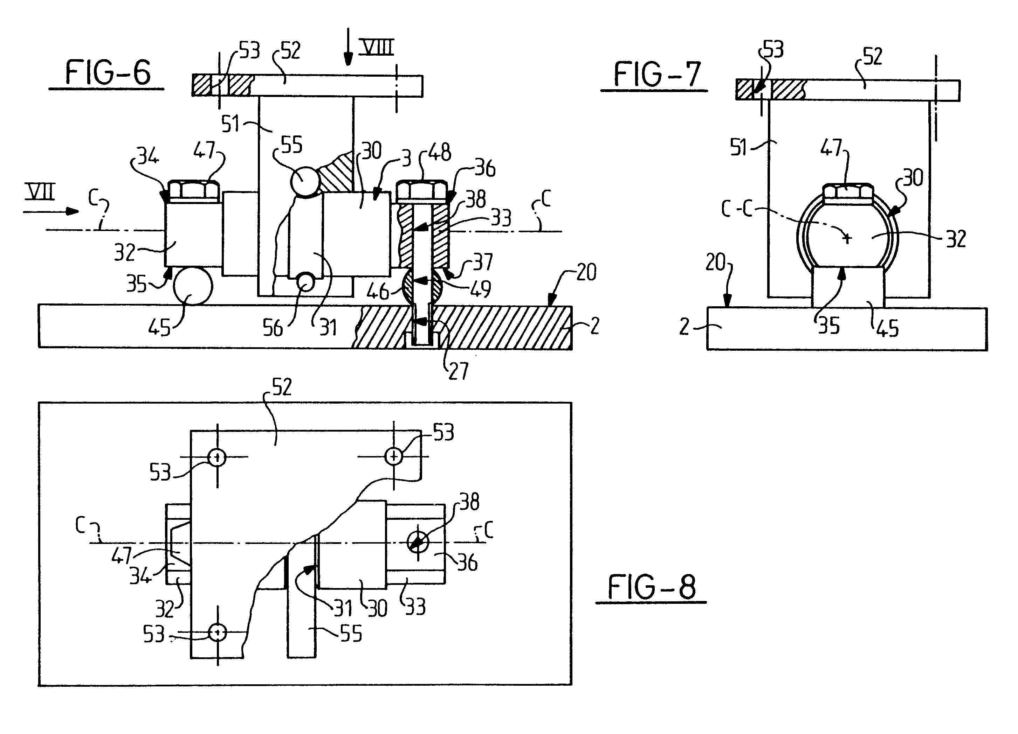

On aperçoit en outre sur les figures, en particulier sur les figures 6 et 8 des orifices traversants 38 réalisés dans chacun des prolongements axiaux 32, 33 perpendiculairement aux méplats précités.

Les méplats inférieurs 35, 37 des prolongements axiaux 32, 33 reposent respectivement sur des paliers cylindriques 45, 46 dont les axes horizontaux s'étendent transversalement à la grande longeur de massif 2.

Ces paliers cylindriques 45, 46 reposent eux-même sur la surface supérieure 20 du massif 2.

Les paliers cylindriques 45, 46 sont en outre munis d'alésages traversants 49 s'étendent transversalement à leur axe principal.

Des boulons 47, 48 sont engagés verticalement dans les orifices 38 des prolongements 32 et 33 et dans les orifices 49 des paliers cylindriques 45 et 46, et viennent en prise dans des alésages filetés 27, d'axe vertical, réalisés dans les massif 2.

L'homme de l'art comprendra aisément que ces boulons 47, 48 permettent d'immobiliser le corps d'épreuve 30 des jauges de contrainte, qui repose sur les paliers 45, 46 en appui sur le massif allongé 2.

On aperçoit par ailleurs sur les figures, des liens élastiques constitués de blocs en matériau élastomère 5, par exemple en caoutchouc néoprène, présentant des faces opposées parallèles, insérés entre deux plaques métalliques 60, 61 parallèles et horizontales et collés sur celles-ci.

L'une des plaques 60 est fixée, par exemple par soudage sur la surface inférieure du cadre répartiteur 1, tandis que la seconde plaque 61 est fixée sur les moyens formant jauges de contrainte 3.

Plus précisément, ces moyens comprennent en outre une chape 51 fixée sur une plaque horizontale supérieure 52 munie d'alésages traversants 53 dans lesquels sont engagés des boulons 54 permettant la fixation de la plaque 52 sur la plaque 61 précitée.

En outre, la chape 51 porte deux tiges cylindriques 55, 56 parallèles et d'axe horizontal, engagées dans la gorge 31 du corps d'épreuve 30 pour autoriser des oscillations entre le cadre répartiteur 1 et le massif 2.

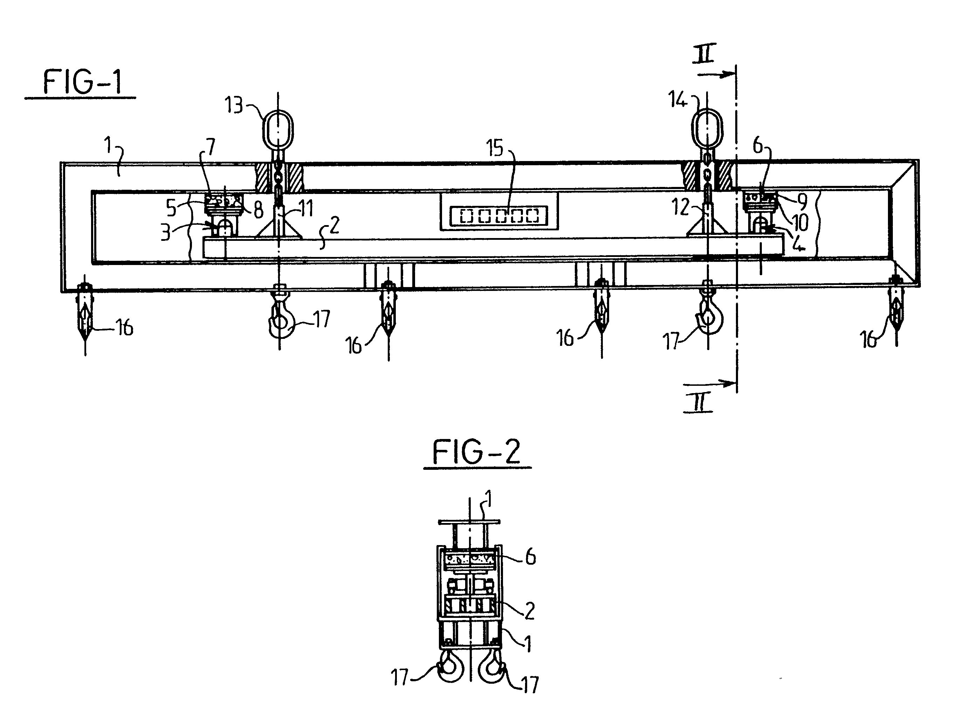

Sur la fig. 1, on a illustré différents crochets 16, 17 suspendus à la branche inférieure horizontale du cadre 1.

Les usages et applications du dispositif de pesage conforme à la présente invention sont multiples. Un certain nombre des applications sont énumérées ci-après à titre d'exemple:

a) contrôle d'une livraison, ou du chargement limite d'un moyen de transport, pour des matières manipulées au pont roulant,

b) mesure, en ligne, de charge sur essieu pour les véhicules,

c) mesure de la charge limite sur les cages d'ascenseurs,

d) pèse-bétail, la cage de contention étant suspendue à la poutre peseuse, etc.

Comme il va de soi, et comme il résulte déjà de ce qui précède, l'invention ne se limite aucunement à ceux de ces modes d'application, non plus qu'à ceux des modes de réalisation de ces diverses parties, qui ont été spécialment indiqués, mais elle en embrasse au contraire toutes les variantes.

On notera en particulier que la poutre dite massif 2 peut être munie d'un jeu de roues, sur lequel le massif prend appui. Le dispositif constitue alors une unité de pesage autonome et mobile, le cadre recevant directement la contrainte de la charge à peser.

Dans une autre variante de réalisation pour application à une unité de pesage statique, le massif de la poutre est rendu solidaire d'un bâti fixe par une liaison rigide, de sorte que le cadre de pesage puisse recevoir une charge suspendue.

De préférence, les corps d'épreuve 30 des jauges de contrainte 3 sont parallèles et perpendiculaires à la grande longueur du massif 2, deux jauges de contrainte à double cisaillement étant prévues, l'un à chaque extrémité du massif 2, comme représenté sur la fig. 1.

## Revendications

1. Poutre peseuse, en particulier pour le pesage en ligne d'objets de grande longueur, caractérisée en ce qu'elle est constituée, d'une part d'un massif métallique (2), se présentant sous la forme générale d'une poutre équipée de moyens formant jauge de contrainte à double cisaillement (34), d'autre part d'un cadre répartiteur (1), à l'intérieur duquel est logé ledit massif, la jonction entre le cadre (1) et les moyens formant jauge (3, 4) du massif étant réalisée à chaque fois par un lien élastique (5, 6).

2. Poutre peseuse selon la revendication 1, caractérisée par le fait que le massif (2) comprend au moins deux jauges de contrainte (3, 4) à double cisaillement disposées respectivement au voisinage de ses extrémités.

3. Poutre peseuse selon l'une des revendications 1 et 2, dans son application à un pont de manutention et de pesage, caractérisée en ce que le massif (2) est suspendu aux câbles de manoeuvre du pont, ces câbles passant librement au travers d'orifices ménagés dans la partie supérieure dubit cadre (1), tandis que la partie inférieure de ce cadre est équipée de crochets de suspension de charge (16, 17).

4. Poutre peseuse selon la revendication 3, caractérisée par le fait que les moyens d'attache (11) prévus sur le massif (2) pour relier celui-ci aux câbles de manoeuvre du pont sont adaptés pour ne pas franchir les orifices ménagés dans la partie supérieure du cadre (1).

5. Poutre peseuse selon l'une des revendications 1 et 2, dans son application à une unité de pesage autonome et mobile, caractérisée en ce que le le massif (2) est muni d'un jeu de roues sur lequel il prend appui, le cadre (1) recevant directement la contrainte de la charge à peser.

6. Poutre peseuse selon l'une des revendications 1 et 2, dans son application à une unité de pesage statique, caractérisée en ce que le massif (2) de la poutre est rendu solidaire d'un bâti fixe par une liaison rigide, de sorte que le cadre de pesage (1) puisse recevoir une charge suspendue.

7. Poutre peseuse selon l'une des revendications de 1 à 6, caractérisée en ce que les corps d'épreuve des jauges de contrainte (3, 4) sont parallèles et perpendiculaires à la grande longueur du massif (2).

8. Poutre peseuse selon l'une des revendications 1 à 7, caractérisée en ce que les liens élastiques (5, 6) entre jauges (3, 4) et cadre (2) sont constitués par des blocs en matériau élastomère, par exemple en caoutchouc néoprène, collés sur métal entre jauges (3, 4) et cadre (2).

9. Poutre peseuse selon l'une des revendications 1 à 8, prises en combinaison avec la revendication 2, caractérisée par le fait qu'elle comprend des moyens électroniques (15) de sommation des informations délivrées par les jauges de contrainte.

10. Poutre peseuse selon la revendication 9, caractérisée par le fait qu'elle comprend des moyens (15) d'affichage du résultat délivré par les moyens électroniques de sommation.

## Patentansprüche

1. Wägebalken, insbesondere zum Linienwägen von sehr langen Objekten, dadurch gekennzeichnet, dass er einerseits aus einem metallischen Körper (2) besteht, der die übliche Form eines Wägebalkens hat, der mit Mitteln ausgestattet ist, die Dehnungsmessstreifen mit doppelter Scherung (3, 4) bilden, dass er andererseits aus einem Verteilerrahmen (1) besteht, in dessen Inneren der genannte Körper angeordnet ist, die Verbindung zwischen dem Rahmen (1) und den Mitteln, die die Messstreifen (3, 4) des Körpers bilden, jeweils durch ein elastisches Band (5, 6) hergestellt ist.

2. Wägebalken nach Anspruch 1, dadurch gekennzeichnet, dass der Körper (2) zumindest zwei Dehnungsmessstreifen (3, 4) mit doppelter Scherug hat, die jeweils nahe seinen Endbereichen angeordnet sind.

3. Wägebalken nach einem der Ansprüche 1 oder 2, in Verwendung mit einer Förder- und Wägebrücke, dadurch gekennzeichnet, dass der Körper (2) an den Bedienungsseilen der Förderbrücke aufgehängt ist, diese Seile frei quer durch die Öffnungen laufen, die im oberen Teil des genannten Rahmens (1) angebracht sind, wohingegen der untere Teil dieses Rahmens mit Lastaufhängehaken (16, 17) versehen ist.

4. Wägebalken nach Anspruch 3, dadurch gekennzeichnet, dass die Befestigungsmittel (11), die auf dem Körper (2) vorgesehen sind, um diesen mit den Bedienungsseilen der Förderbrücke zu verbinden, angepasst sind, um durch die Öffnungen, die im oberen Teil des Rahmens ausgebildet sind, nicht hindurchgelangen zu können.

5. Wägebalken nach einem der Ansprüche 1 und 2, in Verwendung mit einer autonomen und beweglichen Wägeeinheit, dadurch gekennzeichnet, dass der Körper (2) mit mehreren Rädern versehen ist, auf die er sich stützt, wobei der Rahmen (1) direkt die Belastung von der zu wiegenden Last aufnimmt.

6. Wägebalken nach einem der Ansprüche 1 oder 2, in Verwendung mit einer statischen Wägeeinheit, dadurch gekennzeichnet, dass der Körper (2) des Wägebalkens mit einem feststehenden Ständer durch eine steife Verbindung fest verbunden ist, so dass der Wägerahmen (1) eine angehängte Last aufnehmen kann.

7. Wägebalken nach einem der Ansprüche 1 bis 6, dadurch gekennzeichnet, dass die Probekörper der Dehnungsmessstreifen (3, 4) parallel und senkrecht zu der grossen Länge des Körpers (2) sind.

8. Wägebalken nach einem der Ansprüche 1 bis 7, dadurch gekennzeichnet, dass die elastischen Verbindungen (5, 6) zwischen Messstreifen (3, 4) und Rahmen (1) aus Blöcken aus elastomerem Material bestehen, z.B. aus Kautschukneopren, das zwischen Messstreifen (3, 4) und Rahmen (1) auf das Metall geklebt ist.

9. Wägebalken nach einem der Ansprüche 1 bis 8, in Verbindung mit Anspruch 2, dadurch gekennzeichnet, dass er elektronische Einrichtungen (15) zum Summieren der Informationen, die durch die Dehnungsmessstreifen geliefert werden, umfasst.

10. Wägebalken nach Anspruch 9, dadurch gekennzeichnet, dass er Einrichtungen (15) hat, die das Resultat anzeigen, das von den elektronischen Summierungseinrichtungen geliefert wird.

## Claims

1. Weighing beam, in particular for the inline weighing of objects of great length, characterised in that it is constituted on the one hand by a metal block (2), which is in the general form of a beam equipped with means forming a strain gauge (3, 4) with double shearing, on the other hand by a distribution frame (1), inside which the said block is housed, the junction between the frame (1) and the means forming the gauge (3, 4) of the block being formed on each occasion by a resilient strap (5, 6).

2. Weighing beam according to Claim 1, characterised by the fact that the block (2) comprises at least two strain gauges (3, 4) with double shearing arranged respectively in the vicinity of its ends.

3. Weighing beam according to one of Claims 1 and 2, in its application to a handling and weighing bridge, characterised in that the block (2) is suspended from manoeuvering cables of the bridge, these cables passing freely through holes provided in the upper part of the said frame (1), whereas the lower part of this frame is equipped with load-suspension hooks (16, 17).

4. Weighing beam according to Claim 3, characterised by the fact that the attachment means (11) provided on the block (2) connecting the latter to the manoeuvering cables of the bridge are adapted so as not to pass through the holes provided in the upper part of the frame (1).

5. Weighing beam according to one of Claims 1 and 2, in its application to an autonomous and movable weighing unit, characterised in that the block (2) is provided with a set of wheels on which it bears, the frame (1) directly receiving the strain of the load to be weighed.

6. Weighing beam according to one of Claims 1 and 2, in its application to a static weighing unit, characterised in that the block (2) of the beam is rendered integral with a fixed frame by a rigid connection, so that the weighing frame (1) may receive a suspended load.

7. Weighing beam according to one of Claims 1 to 6, characterised in that the test bodies of the strain gauges (3, 4) are parallel and perpendicular to the great length of the block (2).

8. Weighing beam according to one of Claims 1 to 7, characterised in that the elastic straps (5, 6) between the gauges (3, 4) and frame (2) are constituted by blocks of elastomeric material, for example of neoprene rubber, stuck onto metal between the gauges (3, 4) and frame (2).

9. Weighing beam according to one of Claims 1 to 8, taken in combination with Claim 2, characterised by the fact that it comprises electronic means (15) for adding the data supplied by the strain gauges.

10. Weighing beam according to Claim 9, characterised by the fact that it comprises means (15) for displaying the result supplied by the electronic adding means.

0 143 713

## FIG-1

## FIG-2

FIG-3    FIG-4    FIG-5

FIG-7

FIG-6

FIG-8